# FASCICULE DE BREVET EUROPEEN

(11) **EP 2 710 663 B1**
(45) Date de publication et mention de la délivrance du brevet: **10.06.2015**
(21) Numéro de dépôt: 12728689.6
(22) Date de dépôt: 15.05.2012
(51) Int. Cl.: H01M 10/44, H01M 10/48, H01M 12/08, H01M 10/42

(54) **ACCUMULATEUR MÉTAL-AIR AVEC DISPOSITIF DE PROTECTION DE L'ÉLECTRODE À AIR**
METALL-LUFT-AKKUMULATOR MIT LUFTELEKTRODENSCHUTZ
METAL-AIR ACCUMULATOR WITH AIR ELECTRODE PROTECTION DEVICE

(30) Priorité: 19.05.2011 FR 1154356
(43) Date de publication de la demande: 26.03.2014
(73) Titulaire: Electricité de France, 75008 Paris (FR)
(72) Inventeur: TOUSSAINT, Gwenaëlle, F-77140 Nemours (FR); STEVENS, Philippe, F-77940 Noisy Rudignon (FR); TOUSSAINT, Bernard, F-54210 Tonnoy (FR)
(74) Mandataire: Cabinet Plasseraud
(86) Numéro de dépôt international: PCT/FR2012/051080
(87) Numéro de publication internationale: WO 2012/156639

(56) Documents cités:
- US-A- 3 532 548

## Description

La présente invention concerne un accumulateur métal-air rechargeable comportant une électrode à air, une électrode de dégagement d'oxygène et un dispositif automatique de protection de l'électrode à air en phase de charge et de décharge de l'accumulateur. L'invention concerne également un procédé de stockage et de restitution d'énergie électrique utilisant un tel accumulateur.

Les batteries métal-air utilisent une électrode négative à base d'un métal tel que le zinc, le fer ou le lithium, couplée à une électrode à air. Lors de la décharge d'une telle batterie, de l'oxygène moléculaire est réduit à l'électrode positive et le métal est oxydé à l'électrode négative :

O₂ + 2 H₂O + 4e⁻ → 4 OH⁻

M → Mⁿ⁺ + ne⁻

Les deux électrodes sont le plus souvent en contact avec un électrolyte aqueux alcalin.

Les piles zinc-air sont commercialisées par exemple pour une utilisation dans des prothèses auditives.

De nombreux travaux ont été effectués depuis plusieurs décennies pour la mise au point et l'optimisation d'électrodes à air permettant de réaliser des générateurs électrochimiques de type métal-air, connus pour leurs énergies massiques élevées, pouvant atteindre plusieurs centaines de Wh/kg.

Les électrodes à air présentent l'avantage de pouvoir utiliser en tant qu'agent oxydant pour la réduction électrochimique l'oxygène de l'air, disponible en quantité illimitée n'importe où et à tout moment. Une grande surface de réaction est toutefois nécessaire car la densité de l'oxygène dans l'air est faible (0,03 mol/L). La structure solide poreuse des électrodes à air fournit cette surface de réaction élevée. Une électrode à air est une structure solide poreuse en contact avec l'électrolyte liquide, généralement une solution aqueuse alcaline. L'interface entre l'électrode à air et l'électrolyte liquide est une interface dite à « triple contact » où sont présents simultanément la matière active de l'électrode, l'oxydant gazeux et l'électrolyte liquide.

On pourra se référer par exemple à l'article de V. Neburchilov et al. « A review on air cathodes for zinc-air fuel cells » Journal of Power Sources 195 (2010), pages 1271 - 1291 pour une description des différents types d'électrodes à air utilisables dans des accumulateurs zinc-air.

Les électrodes à air présentent toutefois un inconvénient considérable qui est leur grande fragilité lorsqu'elles sont utilisées pendant la recharge de l'accumulateur. En effet, l'électrode à air a une structure poreuse et fonctionne sous forme d'électrode volumique dans laquelle la réaction électrochimique a lieu dans tout le volume de l'électrode, à l'interface entre l'oxydant gazeux, l'électrolyte liquide et la matière active solide (triple contact). En phase de charge, de l'oxygène moléculaire gazeux est formé au sein de la structure de l'électrode à air. Cet oxygène gazeux aboutit rapidement à la destruction mécanique de la structure poreuse de l'électrode à air par rupture des liaisons entre les grains de carbone et le polymère liant utilisé.

Par ailleurs, la corrosion du carbone en présence d'oxygène par oxydation du carbone est également accélérée à des potentiels élevés (voir l'article de Kim J., Lee J. Tak Y., « Relationship between carbon corrosion and positive electrode potential in a proton-exchange membrane fuel-cell during start/stop operation » (2009), Journal of Power Sources, 192 (2), pages 674 - 678, et le chapitre « Carbons » de Kinishita, K. (2007), dans le Handbook of Battery Materials (directeur de la publication J.O. Besenhard), Wiley-VCH Verlag GmbH, Weinheim, Germany.).

Les inventeurs ont également observé que les catalyseurs de réduction d'oxygène incorporés dans l'électrode à air, à la surface des grains de carbone, ne sont pas stables aux potentiels élevés, nécessaires à la réaction d'oxydation inverse. Certains auteurs ont utilisé des catalyseurs de réduction d'oxygène plus résistants, couplés à un catalyseur de dégagement d'oxygène dans une électrode bi-fonctionnelle composée de deux couches couplées électriquement (voir US 5 306 579). Cette configuration produit toutefois des électrodes ayant une durée de vie faible et un nombre de cycles limité.

Une autre solution connue à ce problème de la dégradation de l'électrode à air pendant la phase de recharge de l'accumulateur est l'utilisation d'une électrode de dégagement d'oxygène, c'est-à-dire d'une deuxième électrode positive qui ne subit pas de dégradation due à la formation d'oxygène moléculaire.

Le brevet US 3 532 548 décrit un tel accumulateur rechargeable comportant une électrode négative, une électrode à air et une électrode de dégagement d'oxygène (appelée électrode auxiliaire). Pendant la charge de l'accumulateur décrit dans ce document, seule l'électrode négative et l'électrode de dégagement d'oxygène (électrode auxiliaire) sont connectées. Pendant la décharge de l'accumulateur deux modes de fonctionnement sont envisagés :
- un premier mode de fonctionnement « normal » où seule l'électrode à air fonctionne avec l'électrode négative, et
- un deuxième mode de fonctionnement « haute puissance » où les deux électrodes positives (électrode à air et électrode auxiliaire) fonctionnent conjointement.

La Demanderesse a toutefois constaté que le système tel que décrit dans US 3 532 548 ne permettait pas une protection efficace de l'électrode à air. En effet, lorsque, en début de *décharge,* la tension entre les deux bornes de l'accumulateur est trop importante, l'électrode à air peut subir une dégradation électrochimique.

A la connaissance de la Demanderesse cette dégradation en début de *décharge* n'avait jusqu'ici pas été détectée et n'a en tout cas pas été prise en considération dans le document US 3 532 548.

Le but de la présente invention est d'assurer une protection efficace de l'électrode à air poreuse d'un accumulateur métal-air non seulement pendant la phase de charge de l'accumulateur, mais également en cours de décharge.

Ce but est atteint dans la présente invention grâce à un système de protection automatique qui surveille en permanence, et en particulier en début de décharge, le potentiel entre les deux bornes de l'accumulateur et ne connecte l'électrode à air que lorsque ce potentiel est suffisamment faible pour écarter tout risque de dégradation mécanique ou chimique de l'électrode à air.

La présente invention a par conséquent pour objet un accumulateur rechargeable comprenant une ou plusieurs cellules métal-air, chaque cellule comprenant
- une première borne et une deuxième borne,
- une électrode négative métallique pour cellule métal-air, connectée à la première borne,
- une première électrode positive de dégagement d'oxygène,
- une deuxième électrode positive qui est une électrode à air poreuse contenant au moins un catalyseur de réduction d'oxygène, et
- un électrolyte,
- des moyens de commande adaptés pour comparer en continu la tension mesurée (Vₘ) entre la deuxième borne et la première borne à une valeur de consigne (V_{c}) et pour envoyer un signal de commutation aux moyens de commutation lorsque la tension mesurée (Vₘ) devient plus faible que la valeur de consigne (V_{c}),
- des moyens de commutation adaptés pour recevoir un signal de commutation provenant des moyens de commande et pour connecter et déconnecter l'électrode à air de la deuxième borne.

L'accumulateur de la présente invention comprend donc, dans chacune de ses cellules, trois types d'électrodes :
- une électrode négative connectée en permanence à la première borne, c'est-à-dire pendant la phase de charge et la phase de décharge,
- une première électrode positive qui, dans un mode de réalisation, est connectée en continu à la deuxième borne ou qui, dans un autre mode de réalisation, est connectée à la deuxième borne en alternance avec la deuxième électrode positive, c'est-à-dire elle est déconnectée de la deuxième borne au moment de la connexion de la deuxième électrode positive et
- une électrode à air (deuxième électrode positive) qu'il s'agit de protéger contre toute dégradation et qui n'est connectée à la deuxième borne que pendant la deuxième phase de décharge lorsque le potentiel entre les deux bornes est suffisamment faible.

La présente invention englobe également des variantes où une ou plusieurs de ces électrodes est présente en plusieurs exemplaires ou en plusieurs parties. On peut citer à titre d'exemple une cellule avec une électrode négative unique en forme de plaque, deux électrodes à air situées d'un côté et de l'autre de l'électrode négative et deux électrodes positives métalliques (électrodes de dégagement d'oxygène) situées entre l'électrode négative en forme de plaque et les deux électrodes à air.

L'électrode négative peut être en principe n'importe quelle électrode métallique utilisée couramment dans une cellule métal-air. Il peut s'agir par exemple d'une électrode de fer, de lithium ou de zinc, de préférence d'une électrode de lithium (Li/LiOH) ou d'une électrode de zinc (Zn/Zn(OH)₄²⁻), et de manière particulièrement préférée d'une électrode de zinc.

La première électrode positive de dégagement d'oxygène peut-être, par exemple, une électrode d'argent (Ag/AgO) ou une électrode de nickel (Ni/NiO ou NiOH/NiOOH). Dans la cellule électrochimique, cette électrode, de préférence une électrode de nickel, a typiquement une structure de type grille ou plaque perforée, et elle est située généralement entre l'électrode négative et l'électrode à air. La structure perforée de cette électrode sert, de manière connue, à assurer le libre passage des constituants de l'électrolyte liquide entre l'électrode négative et l'électrode à air pendant la décharge.

La deuxième électrode positive est une électrode à air poreuse conçue de manière à permettre le triple contact entre l'électrolyte, l'oxydant gazeux et la matière active solide de l'électrode. Elle peut être choisie en principe parmi toutes celles utilisées habituellement dans la technique et décrites notamment dans l'article de Neburchilov mentionné ci-avant.

Il s'agit de préférence d'une électrode obtenue par agglomération d'une poudre de carbone constituée de grains de carbone à haute surface telle que le produit Vulcan^{®} XC72, commercialisé par la société Cabot. La surface spécifique du carbone peut être augmentée par réaction avec un gaz tel que le CO₂, préalablement à son incorporation dans l'électrode à air. La surface spécifique élevée des grains de carbone est déterminante. En effet, plus elle est importante, plus la densité de courant par unité de surface géométrique d'électrode est élevée. L'électrode poreuse est fabriquée par agglomération des grains de carbone à l'aide d'un liant qui est de préférence un polymère hydrophobe fluoré tel que le FEP commercialisé par la société Dupont. On trouvera une description détaillée d'une électrode à air pour accumulateur métal-air par exemple dans la demande WO 2000/036677.

L'électrode à air, à base de particules de carbone, contient en outre de préférence au moins un catalyseur de réduction d'oxygène. Ce catalyseur de réduction d'oxygène est de préférence choisi dans le groupe constitué de l'oxyde de manganèse et l'oxyde de cobalt. Ces catalyseurs, bien que très efficaces, sont toutefois désactivés lorsqu'ils sont soumis à des potentiels trop élevés et le dispositif de protection automatique de la présente invention, formé par la combinaison d'un moyen de commande et d'un moyen de commutation, décrits plus en détail ci-après, est donc particulièrement important lorsqu'on utilise ces catalyseurs de réduction d'oxygène.

L'électrolyte utilisé est de préférence un électrolyte aqueux alcalin en contact avec l'ensemble des électrodes de la cellule. Dans certains modes de réalisation, par exemple en cas d'utilisation d'une électrode de lithium en tant qu'électrode négative, il peut être nécessaire de séparer physiquement et de manière connue l'électrolyte aqueux de l'électrode négative par un électrolyte solide conducteur d'ions lithium.

Le moyen de commande utilisé dans la présente invention doit être adapté pour comparer en continu la tension mesurée (Vₘ) entre la deuxième borne et la première borne à une valeur de consigne (V_{c}). Cette valeur de consigne est par exemple la valeur d'une tension de référence fournie par une source de tension stabilisée, alimentée par la batterie ou par une pile extérieure. Elle est fixée de préférence à une valeur légèrement inférieure à la tension de cellule à circuit ouvert à l'état chargé lorsque seule l'électrode à air est connectée, soit environ 1,44V pour une batterie zinc air et 3V pour une batterie lithium-air.

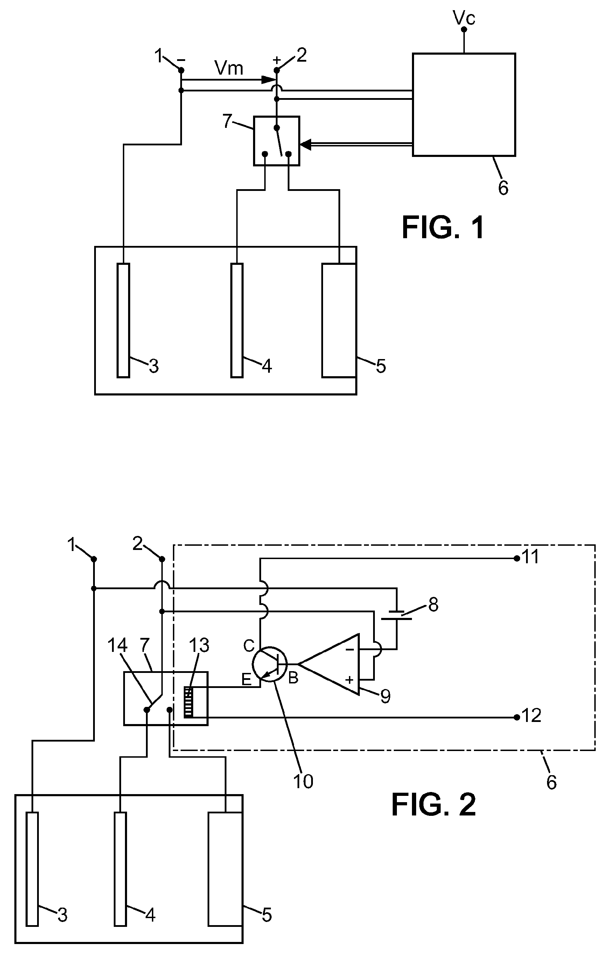

On utilisera de préférence en tant que moyen de commande un relais électromécanique piloté par un amplificateur opérationnel. Un tel amplificateur opérationnel est commercialisé par exemple par la société National Semiconducteur sous la référence LM324, et sera décrit plus en détail en référence à la Figure 2.

La présente invention a également pour objet un procédé de stockage et de restitution d'énergie électrique utilisant un accumulateur tel que décrit ci-dessus.

Ce procédé comprend les étapes successives suivantes :
(a) une phase de charge au cours de laquelle l'électrode négative est connectée à la première borne, la première électrode positive est connectée à la deuxième borne et l'électrode à air est déconnectée,
(b) une première phase de décharge au cours de laquelle l'électrode négative est connectée à la première borne, la première électrode positive est connectée à la deuxième borne, l'électrode à air est déconnectée, et les moyens de commande comparent en continu la tension mesurée (Vₘ) entre les deux bornes à une valeur de consigne (V_{c}),
(c) une première étape de commutation au cours de laquelle la deuxième électrode positive, qui est l'électrode à air, est connectée à la deuxième borne lorsque la valeur de la tension entre les deux bornes devient plus faible que la valeur de consigne (V_{c}),
(d) une deuxième phase de décharge au cours de laquelle l'électrode négative est connectée à la première borne et l'électrode à air est connectée à la deuxième borne, et
(e) une deuxième étape de commutation au cours de laquelle l'électrode à air est déconnectée de la deuxième borne.

La Demanderesse estime que la succession des étapes (b) et (c), c'est-à-dire la non connexion de l'électrode à air en début de décharge, le suivi en continu de la décroissance de la tension entre les deux bornes par un moyen de commande approprié, puis la connexion de l'électrode à air seulement lorsque la valeur absolue de la différence de potentiel entre les bornes est devenu suffisamment faible, permet une protection efficace de l'électrode à air et constitue la contribution de la présente invention à l'état de la technique.

Autrement dit, en début de décharge, tant que la valeur absolue de la tension entre les deux bornes est plus importante que celle de la valeur de consigne (par exemple V_{c} = 1,44 V), l'électrode à air reste déconnectée et ne risque pas d'être dégradée par une différence de potentiel trop élevée.

En cas d'utilisation d'une première électrode positive à base de nickel (Ni/NiO) la tension en début de charge est typiquement égale à 1,7 V.

Lorsque la valeur de la tension entre les deux bornes, mesurée en continu par le moyen de commande, devient plus faible que la valeur de consigne (1,44 V), le dispositif de commande envoie un signal de commutation au moyen de commutation en vue de connecter enfin l'électrode à air à la deuxième borne.

L'électrode à air peut rester connectée jusqu'à la fin de l'étape de décharge, c'est-à-dire jusqu'au début de la prochaine phase de charge. La déconnexion (étape (e)) de l'électrode à air avant la prochaine charge (étape (a)) peut se faire manuellement ou, de préférence, automatiquement grâce au moyen de commande associé au moyen de commutation effectuant la première étape de commutation (étape (c)) du procédé selon l'invention.

Pendant la deuxième phase de décharge au cours de laquelle l'électrode à air est connectée à la deuxième borne, la première électrode positive peut être connectée ou déconnectée. Cette connexion ou déconnexion dépend bien entendu de la structure du moyen de commutation. Dans un mode de réalisation de la présente invention, le moyen de commutation est adapté pour déconnecter la première électrode positive de la deuxième borne. Dans un autre mode de réalisation, le moyen de commutation est adapté pour ne pas déconnecter la première électrode positive de la deuxième borne, qui reste par conséquent connectée en continu à la deuxième borne, aussi bien en charge qu'en décharge.

L'invention sera à présent décrite plus en détail en référence aux figures annexées parmi lesquelles
La Figure 1 est une représentation schématique d'un mode de réalisation d'une cellule d'un accumulateur de la présente invention,
La Figure 2 est une représentation schématique d'un moyen de commande et d'un moyen de commutation formant le dispositif de protection de l'électrode à air de la présente invention.

La cellule de l'accumulateur comporte une première borne 1 et une deuxième borne 2. Lors de l'utilisation de l'accumulateur en décharge, la première borne est une borne négative et la deuxième borne est une borne positive.

La première borne 1 est reliée à une première électrode métallique 3, dite électrode négative, par exemple en zinc ou en lithium.

La deuxième borne 2 est couplée, via un moyen de commutation 7, à une électrode de dégagement d'oxygène 4 ou à une électrode à air 5. Lors de l'utilisation de l'accumulateur en décharge, ces deux électrodes forment des électrodes positives.

L'électrode de dégagement d'oxygène peut être par exemple en nickel. L'électrode à air est une électrode poreuse à base de carbone comportant à l'interface solide/gaz un catalyseur de réduction de l'oxygène. Le catalyseur peut être de l'oxyde de manganèse ou de l'oxyde de cobalt.

Les trois électrodes 3, 4, 5 sont en contact avec au moins un électrolyte, de préférence un électrolyte liquide aqueux alcalin.

Les deux électrodes positives 4, 5 sont couplées à la deuxième borne 2 par l'intermédiaire de moyens de commutation 7. Dans le mode de réalisation représenté à la figure 1 les moyens de commutation 7 sont exclusifs, c'est-à-dire qu'ils connectent la borne 2 soit à l'électrode de dégagement d'oxygène 4, soit à l'électrode à air 5.

L'accumulateur selon l'invention comporte en outre des moyens de commande 6, adaptés pour mesurer en continu la tension Vₘ entre les deux bornes 1 et 2 et pour envoyer un signal de commutation aux moyens de commutation 7 et ainsi commander la connexion ou la déconnexion de l'une et/ou de l'autre électrode positive.

Les moyens de commande sont représentés de façon plus détaillée à la Figure 2.

Une tension de référence, égale à la tension de consigne (V_{c}), est fournie par une source de tension stabilisée 8 connectée entre la première borne 1 et une entrée négative d'un amplificateur opérationnel 9. La deuxième borne 2 est connectée à une entrée positive de l'amplificateur opérationnel 9 qui mesure une différence de tension entre les deux entrées. Ainsi, la tension de consigne est soustraite de la tension entre la première borne et la deuxième borne. Quand la tension mesurée entre les deux bornes est égale à la tension de consigne, l'amplificateur mesure une différence nulle entre les tensions appliquées à ses deux entrées.

Les moyens de commande 6 comportent de plus un transistor 10 faisant office d'interrupteur sur une boucle de courant entre deux bornes 11 et 12.

Quand la tension Vₘ entre les deux bornes 1 et 2 de l'accumulateur est supérieure à la tension de consigne V_{c}, l'amplificateur opérationnel envoie une tension donnée à la base B du transistor 10. Le transistor 10 devient alors conducteur et laisse passer un courant entre son émetteur E et son collecteur C.

Les moyens de commande comportent de plus une bobine, ou un inducteur, 13. Lorsque le courant circule dans la boucle de courant, la bobine émet un champ magnétique.

Par exemple les moyens de commutation 7 peuvent comprendre un relais comportant un élément conducteur 14 déplaçable sous l'influence d'un champ magnétique.

Alors, lorsque la bobine 13 crée un champ magnétique, l'élément conducteur 14 est déplacé d'une première position à une deuxième position. Dans la première position, l'élément conducteur est éloigné de l'électrode à air de façon à la déconnecter de la deuxième borne de l'accumulateur et dans la deuxième position l'électrode à air est connectée à la deuxième borne de l'accumulateur.

## Revendications

1. Accumulateur rechargeable comprenant une ou plusieurs cellules métal-air, chaque cellule comprenant
- une première borne (1) et une deuxième borne (2),
- une électrode négative (3) métallique pour cellule métal-air, connectée à la première borne (1),
- une première électrode positive (4) de dégagement d'oxygène,
- une deuxième électrode positive (5) qui est une électrode à air poreuse contenant au moins un catalyseur de réduction d'oxygène, et
- un électrolyte,
**caractérisé par le fait qu'**il comprend en outre
- des moyens de commande (6) adaptés pour comparer en continu la tension mesurée (Vₘ) entre la borne (2) et la borne (1) à une valeur de consigne (V_{c}) et pour envoyer un signal de commutation aux moyens de commutation (7) lorsque la tension mesurée (Vₘ) devient plus faible que la valeur de consigne (V_{c}),
- des moyens de commutation (7) adaptés pour recevoir un signal de commutation provenant des moyens de commande (6) et pour connecter et déconnecter l'électrode à air (5) de la deuxième borne (2).

2. Accumulateur selon la revendication 1, **caractérisé par le fait que** l'électrode négative (3) est une électrode de lithium (Li/LiOH) ou une électrode de zinc (Zn/Zn(OH)₄²⁻).

3. Accumulateur selon la revendication 1 ou 2, **caractérisé par le fait que** la première électrode positive (4) de dégagement d'oxygène est une électrode d'argent (Ag/AgO) ou une électrode de nickel (Ni/NiO ou NiOH/NiOOH).

4. Accumulateur selon l'une quelconque des revendications précédentes, **caractérisé par le fait que** l'électrode à air est à base de particules de carbone et d'au moins un catalyseur de réduction d'oxygène.

5. Accumulateur selon l'une quelconque des revendications précédentes, **caractérisé par le fait que** le catalyseur de réduction d'oxygène dans l'électrode à air est choisi dans le groupe constitué de l'oxyde de manganèse et l'oxyde de cobalt.

6. Accumulateur selon l'une quelconque des revendications précédentes, **caractérisé par le fait que** la valeur de consigne (V_{c}) est fixée à une valeur inférieure à la tension de la cellule à circuit ouvert à l'état chargé lorsque seule l'électrode à air est connectée.

7. Accumulateur selon l'une quelconque des revendications précédentes, **caractérisé par le fait que** le moyen de commande (6) est un relais électromécanique piloté par un amplificateur opérationnel.

8. Accumulateur selon l'une quelconque des revendications précédentes, **caractérisé par le fait que** la première électrode positive (4) a la forme d'une grille ou d'une plaque perforée et est située entre l'électrode négative et l'électrode à air.

9. Procédé de stockage et de restitution d'énergie électrique utilisant un accumulateur selon l'une quelconque des revendications précédentes, ledit procédé comprenant les étapes successives suivantes :
(a) une phase de charge au cours de laquelle l'électrode négative (3) est connectée à la première borne (1), la première électrode positive (4) est connectée à la deuxième borne (2) et l'électrode à air (5) est déconnectée,
(b) une première phase de décharge au cours de laquelle l'électrode négative (3) est connectée à la première borne (1), la première électrode positive (4) est connectée à la deuxième borne (2), l'électrode à air (5) est déconnectée, et les moyens de commande (6) comparent en continu la tension mesurée (Vₘ) entre la borne (2) et la borne (1) à une valeur de consigne (V_{c}),
(c) une première étape de commutation au cours de laquelle la deuxième électrode positive (5), qui est l'électrode à air, est connectée à la deuxième borne (2) lorsque la valeur de la tension entre la borne (2) et la borne (1) devient plus faible que la valeur de consigne (V_{c}),
(d) une deuxième phase de décharge au cours de laquelle l'électrode négative (3) est connectée à la première borne (1) et l'électrode à air (5) est connectée à la deuxième borne (2), et
(e) une deuxième étape de commutation au cours de laquelle l'électrode à air (5) est déconnectée de la deuxième borne (2).

10. Procédé selon la revendication 9, **caractérisé par le fait qu'**à la première étape de commutation, les moyens de commutation (7) déconnectent la première électrode positive (4) de la deuxième borne (2).

11. Procédé selon la revendication 9, **caractérisé par le fait qu'**à la première étape de commutation, les moyens de commutation (7) ne déconnectent pas la première électrode positive (4) de la deuxième borne (2).

## Patentansprüche

1. Wiederaufladbarer Akkumulator mit einer oder mehreren Metall-Luft-Zellen, wobei jede Zelle umfasst
- eine erste Schnittstelle (1) und eine zweite Schnittstelle (2),
- eine negative metallische Elektrode (3) für eine Metall-Luft-Zelle, die mit der ersten Schnittstelle (1) verbunden ist,
- eine erste positive Sauerstoffentwicklungselektrode (4),
- eine zweite positive Elektrode (5), die eine poröse Luftelektrode ist, die mindestens einen Sauerstoffreduktionskatalysator umfasst und
- einen Elektrolyten,
**dadurch gekennzeichnet, dass** der Akkumulator ferner umfasst
- Steuermittel (6), die ausgebildet sind, um kontinuierlich die zwischen der Schnittstelle (2) und der Schnittstelle (1) gemessene Spannung (Vₘ) mit einem Richtwert (V_{c}) zu vergleichen und ein Kommutationssignal an Kommutationsmittel (7) zu schicken, wenn die gemessene Spannung (Vₘ) unter den Richtwert (V_{c}) fällt,
- Kommutationsmittel (7), die ausgebildet sind, um ein Kommutationssignal von den Steuermitteln (6) zu empfangen und um die Luftelektrode (5) mit der zweiten Schnittstelle (2) zu verbinden und von dieser zu trennen.

2. Akkumulator nach Anspruch 1, **dadurch gekennzeichnet, dass** die negative Elektrode (3) eine Lithiumelektrode (Li/LiOH) oder eine Zinkelektrode (Zn/Zn(OH)₄²⁻) ist.

3. Akkumulator nach Anspruch 1 oder 2, **dadurch gekennzeichnet, dass** die erste positive Sauerstoffentwicklungselektrode (4) eine Silberelektrode (Ag/AgO) oder eine Nickelelektrode (Ni/NiO oder NiOH/NiOOH) ist.

4. Akkumulator nach einem beliebigen der vorherigen Ansprüche, **dadurch gekennzeichnet, dass** die Grundlage für die Luftelektrode Kohlenstoffpartikel und mindestens ein Sauerstoffreduktionskatalysator ist.

5. Akkumulator nach einem beliebigen der vorherigen Ansprüche, **dadurch gekennzeichnet, dass** der Sauerstoffreduktionskatalysator in der Luftelektrode aus der Gruppe umfassend Manganoxid und Cobaltoxid ausgewählt wird.

6. Akkumulator nach einem beliebigen der vorherigen Ansprüche, **dadurch gekennzeichnet, dass** der Richtwert (V_{c}) auf einen Wert festgelegt ist, der unter der Zellspannung bei offenem Stromkreis im geladenen Zustand liegt, wenn nur die Luftelektrode verbunden ist.

7. Akkumulator nach einem beliebigen der vorherigen Ansprüche, **dadurch gekennzeichnet, dass** das Steuermittel (6) ein elektromechanisches Relais ist, das von einem Operationsverstärker gesteuert wird.

8. Akkumulator nach einem beliebigen der vorherigen Ansprüche, **dadurch gekennzeichnet, dass** die erste positive Elektrode (4) die Form eines Gitters oder einer perforierten Platte hat und zwischen der negativen Elektrode und der Luftelektrode angeordnet ist.

9. Verfahren zur Speicherung und Rückgewinnung von elektrischer Energie unter Verwendung eines Akkumulators nach einem beliebigen der vorherigen Ansprüche, wobei das Verfahren die folgenden aufeinanderfolgenden Schritte umfasst:
a) eine Ladephase, während der die negative Elektrode (3) mit der ersten Schnittstelle (1) verbunden ist, die erste positive Elektrode (4) mit der zweiten Schnittstelle (2) verbunden ist und die Luftelektrode (5) nicht verbunden ist,
b) eine erste Entladephase, während der die negative Elektrode (3) mit der ersten Schnittstelle (1) verbunden ist, die erste positive Elektrode (4) mit der zweiten Schnittstelle (2) verbunden ist, die Luftelektrode (5) nicht verbunden ist, und die Steuermittel (6) kontinuierlich die zwischen der Schnittstelle (2) und der Schnittstelle (1) gemessene Spannung (Vₘ) mit einem Richtwert (V_{c}) vergleichen,
c) einen ersten Kommutationsschritt, während dem die zweite positive Elektrode (5), welche die Luftelektrode ist, mit der zweiten Schnittstelle (2) verbunden ist, wenn der Spannungswert zwischen der Schnittstelle (2) und der Schnittstelle (1) unter den Richtwert (V_{c}) fällt,
d) eine zweite Entladungsphase, während der die negative Elektrode (3) mit der ersten Schnittstelle (1) verbunden ist und die Luftelektrode (5) mit der zweiten Schnittstelle (2) verbunden ist,
e) ein zweiter Kommutationsschritt, während dem die Luftelektrode (5) von der zweiten Schnittstelle (2) getrennt ist.

10. Verfahren nach Anspruch 9, **dadurch gekennzeichnet, dass** beim ersten Kommutationsschritt die Kommutationsmittel (7) die erste positive Elektrode (4) von der zweiten Schnittstelle (2) trennen.

11. Verfahren nach Anspruch 9, **dadurch gekennzeichnet, dass** beim ersten Kommutationsschritt die Kommutationsmittel (7) die erste positive Elektrode (4) nicht von der zweiten Schnittstelle (2) trennen.

## Claims

1. A rechargeable accumulator comprising one or more metal-air cells, each cell comprising
- a first terminal (1) and a second terminal (2),
- a metal negative electrode (3) for a metal-air cell, connected to the first terminal (1),
- a first positive oxygen-releasing electrode (4),
- a second positive electrode (5), which is a porous air electrode containing at least one oxygen reducing catalyst, and
- an electrolyte,
**characterized in that** it furthermore comprises
- control means (6) adapted to continuously compare the measured voltage (Vₘ) between the terminal (2) and the terminal (1) to a setpoint value (V_{c}) and to send a switch signal to switching means (7) when the measured voltage (Vₘ) falls below the setpoint value (V_{c}),
- the switching means (7) adapted to receive a switch signal originating from the control means (6) and to connect and disconnect the air electrode (5) from the second terminal (2).

2. The accumulator of claim 1, **characterized in that** the negative electrode (3) is a lithium electrode (Li/LiOH) or a zinc electrode (Zn/Zn(OH)₄²⁻).

3. The accumulator of claim 1 or claim 2, **characterized in that** the first positive oxygen-releasing electrode (4) is a silver electrode (Ag/AgO) or a nickel electrode (Ni/NiO or NiOH/NiOOH).

4. The accumulator as claimed in any one of the preceding claims, **characterized in that** the air electrode comprises carbon particles and on at least one oxygen reducing catalyst.

5. The accumulator as claimed in any one of the preceding claims, **characterized in that** the oxygen reducing catalyst in the air electrode is chosen from the group formed by manganese oxide and cobalt oxide.

6. The accumulator as claimed in any one of the preceding claims, **characterized in that** the setpoint value (V_{c}) is set to a value lower than the open circuit voltage of the cell in the charged state when only the air electrode is connected.

7. The accumulator as claimed in any one of the preceding claims, **characterized in that** the control means (6) is an electromechanical relay driven by an operational amplifier.

8. The accumulator as claimed in any one of the preceding claims, **characterized in that** the first positive electrode (4) takes the form of a grid or of a perforated plate and lies between the negative electrode and the air electrode.

9. A method for storing and releasing electrical energy using an accumulator as claimed in any one of the preceding claims, said method comprising the following successive steps:
(a) a charging phase during which the negative electrode (3) is connected to the first terminal (1), the first positive electrode (4) is connected to the second terminal (2) and the air electrode (5) is disconnected,
(b) a first discharging phase during which the negative electrode (3) is connected to the first terminal (1), the first positive electrode (4) is connected to the second terminal (2), the air electrode (5) is disconnected, and the control means (6) continuously compare the measured voltage (Vₘ) between the terminal (2) and the terminal (1) to a setpoint value (V_{c}),
(c) a first switching step during which the second positive electrode (5), which is the air electrode, is connected to the second terminal (2) when the value of the voltage between the terminal (2) and the terminal (1) falls below the setpoint value (V_{c}),
(d) a second discharging phase during which the negative electrode (3) is connected to the first terminal (1), and the air electrode (5) is connected to the second terminal (2), and
(e) a second switching step during which the air electrode (5) is disconnected from the second terminal (2).

10. The method as claimed in claim 9, **characterized in that** in the first switching step, the switching means (7) disconnect the first positive electrode (4) from the second terminal (2).

11. The method as claimed in claim 9, **characterized in that** in the first switching step, the switching means (7) do not disconnect the first positive electrode (4) from the second terminal (2).
